# EUROPEAN PATENT APPLICATION

(11) **EP 2 259 589 A2**
(43) Date of publication of application: **08.12.2010**
(21) Application number: 10156003.5
(22) Date of filing: 09.03.2010
(51) Int. Cl.: H04N 7/00

(54) **Improving unmanned aerial vehicle communication**

(30) Priority: 01.06.2009 US 475766
(71) Applicant: Honeywell International Inc., Morristown, NJ 07962 (US)
(72) Inventor: Adams, Brian, Morristown, NJ 07962-2245 (US); Rowe, Eric, Morristown, NJ 07962-2245 (US); Sanchez, Erik, Morristown, NJ 07962-2245 (US)
(74) Representative: Buckley, Guy Julian

(57) **Abstract**

Systems for improving unmanned aerial vehicle communication are presented. In a primary embodiment, a UAV transmits an encoded stream of video frames at a first bit-rate over a wireless air interface to a remote control station. The remote control station decodes and displays the video frames for a human user. Upon determining that the characteristics of the wireless air interface have changed, the UAV changes its codec configuration to transmit the encoded stream of video frames at a second bit-rate. The UAV and the ground control station may also use a prioritization scheme to prioritize command and control information and at least some types of video frames over other types of video frames and additional information. In this way, important communications are more likely to be received when the capacity of the wireless air interface is limited.

## Description

### FIELD

The disclosure relates to improving unmanned aerial vehicle (UAV) communication.

### GOVERNMENT RIGHTS

The United States Government may have acquired certain rights in this invention pursuant to Contract No. W56HZV-05-C-0724 with the United States Army.

### BACKGROUND

A UAV may be a self-piloted or remotely-piloted aircraft that can carry cameras, sensors, communications equipment, or other payloads, is capable of controlled, sustained, level flight, and is usually powered by an engine. A self-piloted UAV may fly autonomously based on pre-programmed flight plans, while a remotely-piloted UAV may fly based at least in part on input from a remote control station. For instance, a remotely-piloted UAV may be remotely controlled from the ground, a ground vehicle, or the air by a human, a computer, or some other entity.

UAVs are becoming increasingly used for various missions where manned flight vehicles are not appropriate or not feasible. These missions may include military situations, such as surveillance, reconnaissance, target acquisition, data acquisition, communications relay, decoy, harassment, or supply flights. UAVs also may be used for a growing number of civilian missions where a human observer would be at risk, such as firefighting, natural disaster reconnaissance, police observation of civil disturbances or crime scenes, and scientific research. Examples of the latter would be observations of weather formations or a volcano.

As miniaturization technology has improved, it is now possible to manufacture very small UAVs (sometimes referred to as micro-aerial vehicles, or MAVs). For examples of UAV and MAV design and operation, see U.S. Patent Application Publication No. 2010/0012776 by Hursig et al., U.S. Patent Application Publication No. 2010/0017114 by Tehan et al., and U.S. Patent Application Serial No. 12/187172.

For instance, a UAV can be designed to use a ducted fan for propulsion, and may fly like a helicopter, using a propeller that draws in air through a duct to provide lift. The UAV propeller is preferably enclosed in the duct and may be generally driven by a gasoline engine. The UAV may be controlled using micro-electrical mechanical systems (MEMS) electronic sensor technology.

The UAV may communicate with one or more remote control stations over a wireless air interface. However, the achievable signal quality of the wireless air interface may fluctuate and, over time, may become subject to more or less physical or electrical interference. For instance, UAV movement may result in a change of the characteristics of the wireless air interface between the UAV and the remote control station. Thus, it may be challenging for the UAV to exchange media and/or command and control information with the remote control station.

### SUMMARY

In order to improve UAV communication, various embodiments are presented. In a first embodiment, a UAV communicates over a wireless air interface with a remote control station. This communication may include, but is not limited to, any combination of (1) the exchange of command and control information between the UAV and the remote control station, (2) the transmission of multimedia information (e.g., audio and/or video) from the UAV to the remote control station, and (3) the exchange of additional information between the UAV and the remote control station.

The wireless air interface may exhibit a first maximum bit-rate, and the UAV may transmit the multimedia information to the remote control station at a first codec bit-rate. Preferably, the first codec bit-rate is less than the first maximum bit-rate. The remote control station may display the multimedia to a human user.

The maximum bit-rate of the wireless air interface may change over time. Thus, after determining that the maximum bit-rate of the wireless air interface has changed to that of a second maximum bit-rate, the UAV may adjust the transmission of the multimedia information to a second codec bit-rate. Preferably, the second codec bit-rate is less than the second maximum bit-rate. In this way, the UAV adjusts to the changing characteristics of the wireless air interface by decreasing or increasing the codec bit-rate as the bit-rate of the wireless air interface changes.

In a second embodiment, which may be implemented in conjunction with the first embodiment, the UAV and the remote control station selectively prioritize the transmission of some types of information over the transmission of other types of information. For example, when the maximum bit-rate of the wireless air interface is low, some information transmitted on the wireless air interface may be lost. However, it is desirable for command and control information and the multimedia information to be successfully received, even at the expense of additional information being lost. Therefore, the UAV and the remote control station may prioritize the transmission of command and control information, as well as at least some of the multimedia information, over the transmission of additional information.

In a third embodiment, the multimedia stream may be a differentially-encoded video stream. Such a video stream may consist of full video frames and differentially-encoded video frames. Since the full video frames do not rely on preceding or following video frames in the stream to be properly displayed, the UAV may further prioritize the transmission of the full video frames over the transmission of the differentially encoded video frames. So that when the maximum bit-rate of the wireless air interface is low, the remote control station has a better opportunity to receive displayable and/or discernable video frames.

These and other aspects and advantages will become apparent to those of ordinary skill in the art by reading the following detailed description, with reference where appropriate to the accompanying drawings.

### BRIEF DESCRIPTION OF THE DRAWINGS

Figure 1 is a diagram of an example UAV design;
Figure 2 depicts an example of a UAV in flight and in communication with a remote control station;
Figure 3 depicts an example UAV configuration;
Figure 4 depicts an example remote control station configuration; and
Figure 5 is a flow chart depicting a method in accordance with an example embodiment.

### DESCRIPTION

### I. Exemplary System Designs

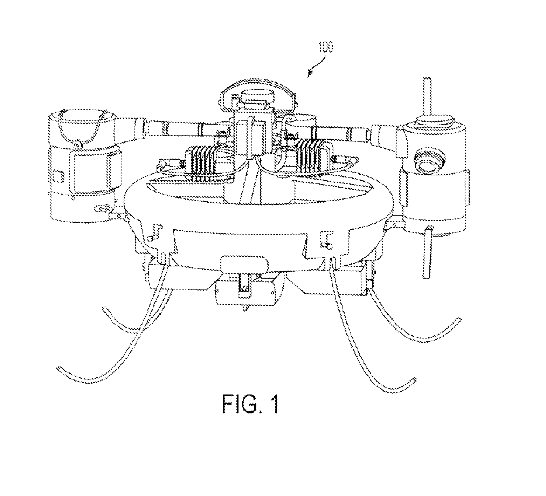

Figure 1 depicts an example UAV 100. UAV 100 may be used for reconnaissance, surveillance and target acquisition (RSTA) missions, as well as other types of missions. For example, UAV 100 may launch and execute an RSTA mission by flying to one or more waypoints according to a flight plan before arriving at a landing position. Once launched, UAV 100 can perform such a UAV flight plan autonomously or with varying degrees of remote operator guidance from one or more remote control stations. UAV 100 may be a hovering ducted fan UAV, but alternative UAV embodiments can also be used.

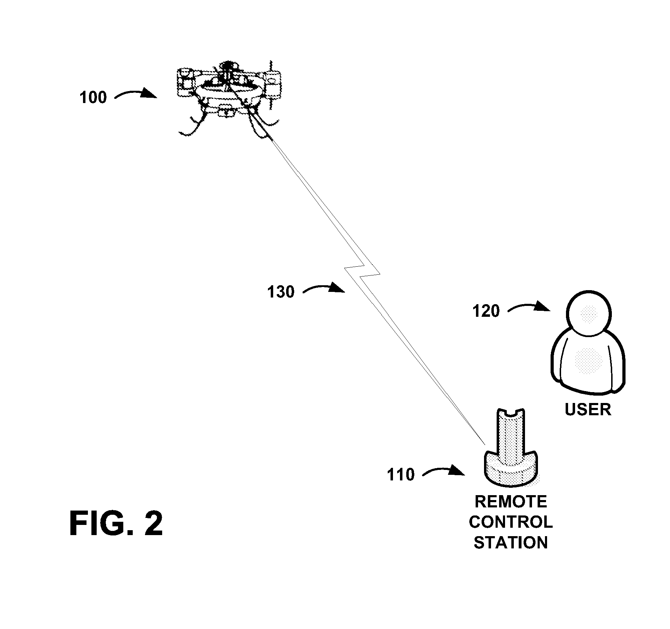

Figure 2 depicts UAV 100 in flight, communicating with remote control station 110 via wireless air interface 130. Remote control station 110 may be used by a human user 120. Remote control station 110 may be a fixed or mobile ground-based system or air-based system, and may facilitate the control and monitoring of UAV 100. For instance, remote control station 110 may transmit command and control information to UAV 100 over wireless air interface 130. This command and control information may direct the flight of UAV 100. Furthermore, UAV 100 may transmit multimedia information (e.g., audio and/or video) to remote control station 110. Based on the multimedia information, human user 120 may use remote control station 110 to modify or control the flight of UAV 100. Via wireless air interface 130, human user 120 may have various levels of control over the operation of UAV 100.

Of course, remote control station 110 could be arranged to autonomously make such modifications to the flight of UAV 100 without human input. It should be understood that a human user is not required in any of the embodiments herein.

In the following, examples are given describing how a UAV might transmit a video stream to a remote control station. It should be understood that these examples are not limiting, and that the UAV may be also capable of transmitting any form of multimedia, including streaming or interactive audio and/or video, to the remote control station.

Wireless air interface 130 may operate according to various types of wireless technologies, including orthogonal frequency division multiplexing (OFDM), frequency hopping, code division multiple access (CDMA), or any other wireless technology. Preferably, wireless air interface 130 provides one or more bi-directional physical and/or logical channels between UAV 100 and remote control station 110, so that UAV 100 can transmit information to remote control station 110, and remote control station 110 can transmit information to UAV 100.

Transmissions on wireless air interface 130 may take the form of packets. A packet may be a discrete unit of data, typically a logically grouped series of bytes, organized into header and payload sections. For instance, a single frame of video from UAV 100 may be divided into a number of smaller pieces so that each of these pieces can be placed in a packet for transmission over wireless air interface 130 to remote control station 110. The Internet Protocol (IP) is a commonly-used packet-based communication technology, as it is the basis of most communication on the Internet. IP is defined by the Internet Engineering Task Force (IETF) Request for Comments (RFC) 791. IP typically is used in conjunction with at least one of the Transport Control Protocol (TCP), as defined by IETF RFC 793, and the User Datagram Protocol (UDP), as defined by IETF RFC 768. These RFCs are incorporated by reference in their entirety herein.

Communication on wireless air interface 130 may occur in a full-duplex mode or a half-duplex mode. Furthermore, channels on wireless air interface 110 may include signaling channels and bearer channels. Preferably, signaling channels are used to exchange information regarding the establishment, maintenance, and/or teardown of bearer channels, while bearer channels contain data or media information (e.g., command and control information, video information, and so on). It should be understood that one UAV may communicate with multiple remote control stations over a wireless air interface. As such, a UAV may be handed off from one remote control station to another, or may communicate simultaneously with multiple remote control stations. Similarly, one remote control station may communicate with multiple UAVs over a wireless air interface. Furthermore, a single wireless air interface may support communications between multiple UAVs and remote control stations.

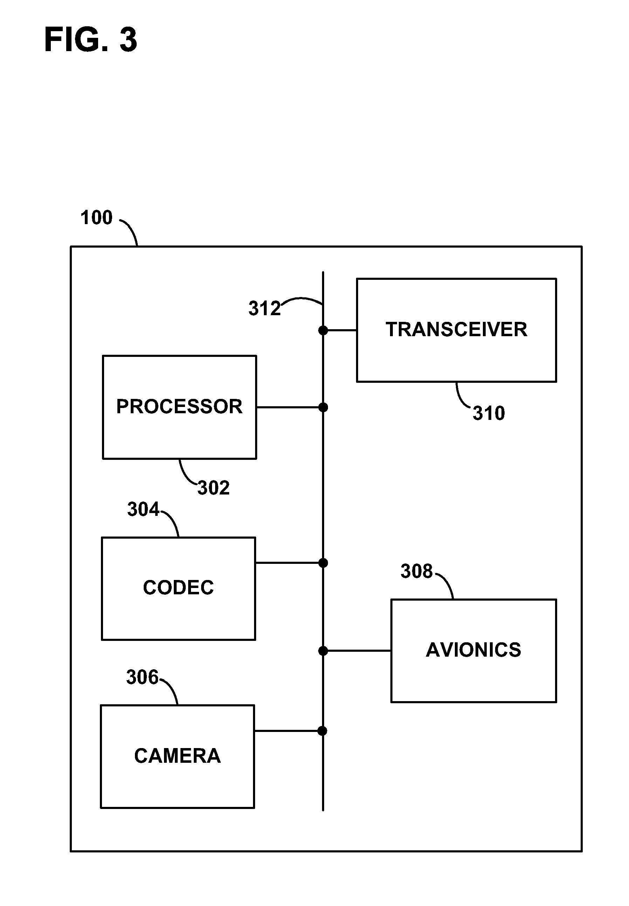

Figure 3 is a block diagram illustrating at least some of the functional components of UAV 100. In particular, UAV 100 may include a processor unit 302, a codec unit 304, a camera unit 306, an avionics unit 308, and a transceiver unit 310, all of which may be coupled by a system bus 312 or a similar mechanism. It should be understood that the embodiments of UAV 100 discussed herein may have more or fewer components than shown in Figure 3, and these components may be logically or physical combined with one another in various combinations. For instance, in some embodiments, codec unit 304 may be combined with camera unit 306.

Processor unit 302 preferably includes one or more central processing units (CPUs), such as one or more general purpose processors and/or one or more dedicated processors (e.g., application specific integrated circuits (ASICs), field programmable gate arrays (FPGAs), or digital signal processors (DSPs), etc.) Processor unit 302 may have access to volatile and/or non-volatile memory that can be integrated in whole or in part with processor unit 302. Such memory preferably holds program instructions executable by processor unit 302, and data that is manipulated by these instructions to carry out various logic functions described herein. (Alternatively, the logic functions can be defined by hardware, firmware, and/or any combination of hardware, firmware, and software.)

Camera unit 306 may be a video camera capable of taking still photographs or motion pictures. Thus, camera unit 306 may be capable of generating a real-time stream of video frames, wherein each frame may be a discrete picture. Camera unit 306 may be capable of zooming in or out, or panning left, right, up, or down. In addition to camera unit 306, UAV 100 may include one or more active or passive sensors, such an acoustic sensor. The acoustic sensor may operate in conjunction with camera unit 306 to generate synchronized audio and video streams. On the other hand, the acoustic sensor may be built into camera unit 306.

In alternative embodiments, different types of sensors may be used in addition to camera 306 and/or the acoustic sensor, such as motion sensors, heat sensors, wind sensors, RADAR, LADAR, electro-optical (EO), non-visible-light sensors (e.g. infrared (IR) sensors), and/or EO/IR sensors. Furthermore, multiple types of sensors may be utilized in conjunction with one another in accordance with multi-modal navigation logic. Different types of sensors may be used depending on the characteristics of the intended mission and the environment in which UAV 100 is expected to operate.

UAV 100 may comprise codec unit 304 (i.e., a module capable of encoding and/or decoding audio and/or video signals). Codec unit 304 may receive audio and/or video input from camera unit 306, for example a real-time or near-real-time stream of video frames, and encode this input in a binary format. The encoding may take place according to established standard formats, such as the Motion Picture Expert's Group 4 (MPEG-4), or according to proprietary formats, or some combination of standard and proprietary formats. Preferably, the encoding occurs according to one or more codec parameters. Such parameters may include, but are not limited to, a frame rate, a frame size, a resolution, and a color depth. Using these parameters, codec unit 304 may generate an encoded stream of video frames, and may send these frames to other UAV components. For instance, codec unit 304 may send these frames to transceiver 310 for transmission to a remote control station.

Codec unit 304 can change the quality and bit-rate of the encoded stream of video frames by adjusting the codec parameters. For example, codec unit 304 can generate a higher quality stream of video frames by increasing at least one of the frame rate, the frame size, the resolution, or the color depth. On the other hand, codec unit 304 can generate a lower quality (and lower bit-rate) stream of video frames by decreasing at least one of the frame rate, the frame size, the resolution, or the color depth.

Typically, the quality of the media generated by the codec is proportional to the bit-rate of that media. For instance, an MPEG-4 codec may support bit rates of 768, 384, and 192 kilobits per second, where the 768-kilobit rate generates the highest quality video and the 192-kilobit rate generates the lowest quality video. Of course, other bit-rate and associated media qualities may be used instead or in addition to these bit-rates and qualities. Regardless of the bit-rates supported by codec unit 304, it is generally desirable to use a higher bit-rate rather than a lower bit-rate for transmission. Doing so may facilitate remote control station 110 receiving and displaying video frames with greater clarity, which may in turn lead to a more favorable viewing experience for human user 120.

UAV 100 may additionally comprise avionics unit 308, which may control the flight of UAV 100. To this end, avionics unit 308 may be capable of receiving signals on system bus 312 that influence various aspects of UAV flight, including but not limited to speed, direction, and altitude. These signals may be command and control information that originated from a remote control station.

For instance, avionics unit 308 may be able to fly UAV 100 at a given speed, direction, and altitude until it reaches predetermined coordinates. Then avionics unit 308 may be able to have UAV 100 hover at those coordinates while camera unit 306 streams live audio and/or video of the terrain or objects at those coordinates.

Generally speaking, UAV 100 may be programmed with a UAV flight plan that instructs avionics unit 308 to fly UAV 100 between a number of waypoints in a particular order, while avoiding certain geographical coordinates, locations, or obstacles. For example, if UAV 100 is flying in the vicinity of a commercial, civilian or military flight corridor, avionics unit 308 may avoid flying UAV 100 in this corridor during the flight corridor's hours of operation. Similarly, if UAV 100 is programmed with a flight path of a manned aircraft or another UAV, avionics unit 308 may adjust the UAV flight plan to avoid this flight path. Additionally, if UAV 100 is flying according to its UAV flight plan and UAV 100 encounters a known or previously unknown obstacle, avionics unit 308 should adjust the UAV flight plan to avoid the obstacle. Avionics unit 308 may accomplish these tasks autonomously, or in conjunction with other components in Figure 3, such as processor 302.

Moreover, UAV 100 may comprise transceiver unit 310, for communicating with remote control station 110. Transceiver unit 310 preferably includes one or more wireless radios for communicating on wireless air interface 130. Furthermore, transceiver unit 310 may receive the encoded stream of video frames that were generated by codec unit 304, and transmit these frames to remote control station 110 via wireless air interface 130. Additionally, transceiver unit 310 may be capable of transmitting and receiving command and control information in order to exchange this information with remote control station 110. Transceiver unit 310 also may be capable of transmitting and receiving additional information, in order to exchange this information with remote control station 110.

Herein, the term "additional information" includes any type of information, other than command and control information or video information, that may be exchanged between a UAV and a ground control station. Examples of additional information may include, but is not limited to, operations logs, software images, and configuration data.

All UAV units depicted by Figure 3, or not shown in Figure 3, may be commercial-off-the-self (COTS) components. For instance, processor unit 302 may be a general purpose processor manufactured by Intel Corporation or Advanced Micro Devices (AMD) Corporation. Alternatively, some or all of these units may be custom or proprietary components.

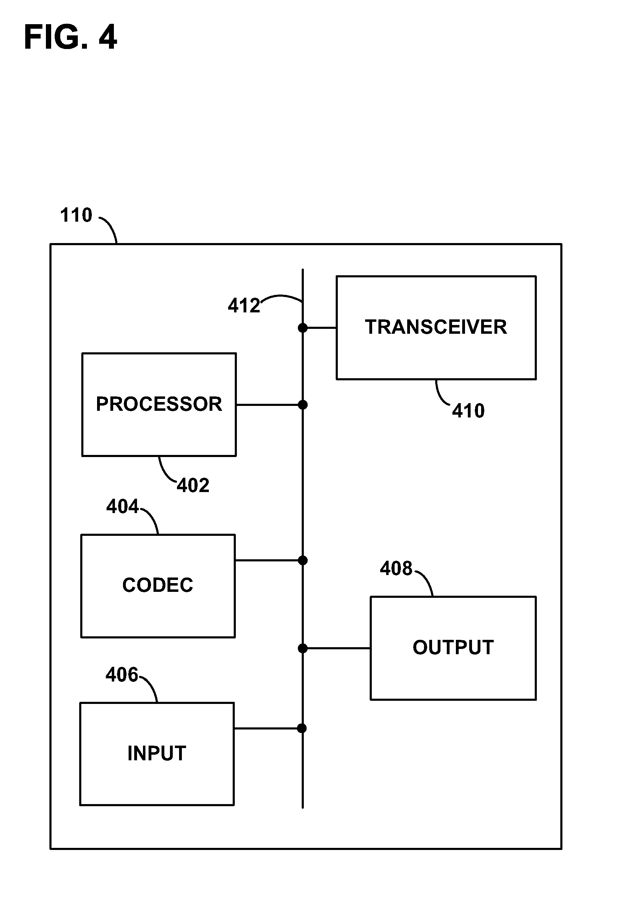

Figure 4 is a block diagram illustrating at least some of the functional components of remote control station 110. In particular, remote control station 110 may include a processor unit 402, a codec unit 404, an input unit 406, an output unit 408, and a transceiver unit 410, all of which may be coupled by a system bus 412 or a similar mechanism. It should be understood that the embodiments of remote control station 110 discussed herein may have more or fewer components than shown in Figure 4, and these components may be logically or physical combined with one another in various combinations. For instance, in some embodiments, input unit 406 may be combined with output unit 408.

Similar to the processor unit of UAV 100, processor unit 402 preferably includes one or more central processing units (CPUs), such as one or more general purpose processors and/or one or more dedicated processors (e.g., application specific integrated circuits (ASICs), field programmable gate arrays (FPGAs), or digital signal processors (DSPs), etc.) Processor unit 402 may have access to volatile and/or non-volatile memory that can be integrated in whole or in part with processor unit 402. Such memory preferably holds program instructions executable by processor unit 402, and data that is manipulated by these instructions to carry out various logic functions described herein. (Alternatively, the logic functions can be defined by hardware, firmware, and/or any combination of hardware, firmware, and software.)

Remote control station 110 may comprise codec unit 404. Codec unit 404 may receive an encoded stream of video frames, via transceiver unit 410, from a UAV. Preferably, codec unit 404 decodes the encoded stream of video frames, and is capable of transmitting the resulting decoded stream of video frames to output unit 408. Codec unit 404 may be capable of decoding standard formats, such as MPEG-4, proprietary audio/video formats, or both. Remote control station 110 may also include storage (not shown) that may be used to store an encoded or decoded stream of video received from a UAV, such that this stream can be replayed for later viewing.

Remote control station 110 may also comprise input unit 406, to facilitate user interaction with remote control station 110. Input unit 406 may comprise multiple types of input devices, such as a keyboard, a joystick, a mouse, a touch screen, a microphone, and so on. Additionally or alternatively, remote control station 110 may support remote access from another device, via transceiver unit 410 or via another interface (not shown), such an RS-232 port. Preferably, input unit 406 is capable of allowing human user 120 to enter command and control information, as well as additional information. This information may then be manipulated by processor unit 402, and then sent to transceiver unit 410 for transmission to a UAV.

Remote control station 110 may additionally comprise output unit 408. Output unit 408 may comprise may comprise multiple types of output devices, such as a monitor, printer, or one or more light emitting diodes (LEDs). Preferably, output unit 408 displays the decoded stream of video frames generated by codec 404. This decoded stream of video frames may represent video captured by a UAV and transmitted by the UAV to remote control station 110. Output unit 408 may also display other information associated with a UAV, such as telemetry, health and diagnostics, and/or navigational data.

Moreover, remote control station 110 may comprise transceiver unit 410, for communicating with one or more UAVs. Like transceiver unit 310 onboard a UAV, transceiver unit 410 preferably includes one or more wireless radios for communicating on wireless air interface 130. Furthermore, transceiver unit 410 may receive an encoded stream of video frames from a UAV, and forward these frames to codec unit 404. Additionally, transceiver unit 410 may be capable of transmitting and receiving command and control information, in order to exchange this information with remote control station 110. Transceiver unit 410 may be capable of transmitting and receiving additional information, also in order to exchange this information with a UAV.

Similar to the UAV units, all remote control station units depicted by Figure 4, or not shown in Figure 4, may be COTS components. Alternatively, some or all of these units may be custom or proprietary components.

### II. Exemplary Operation and Communication

Given the design and capabilities of UAVs and remote control stations described above, the following examples illustrate the use these systems. The focus of these examples is on the interaction between a UAV and a remote control station. Many other examples of UAV and remote control system operation may be also in accordance with the embodiments herein.

In a first example of operation, a UAV may be on a target acquisition mission. A human user may remotely control the flight of the UAV through an input unit of a remote control station. For instance, the human user may employ a joystick and/or a keyboard to remotely control the UAV. The joystick and/or keyboard, potentially with the assistance of the remote control station's processor unit, may generate command and control information representing the human user's input. This command and control information may be transmitted to the UAV by the remote control station's transceiver unit.

As the UAV flies, it may continuously stream live video from its camera unit to its codec unit. The UAV's codec unit may encoded the video and send it on to the UAV's transceiver unit. The UAV's transceiver unit may transmit this encoded stream of video frames over a wireless air interface, and to the remote control station. The remote control station may receive the live video in an encoded format using its transceiver unit, decode the live video using its codec unit, and display the live video on its output unit. Thus, the human user may be presented with real-time or near-real-time video feedback as the UAV flies.

The human user may determine, by watching the video feedback, that the UAV has acquired a target. Accordingly, the human user may, via the remote control station's input unit, instruct the UAV to follow the target at a particular height and distance. While this reconnaissance is taking place, the UAV preferably continues to transmit the live video stream, so that the human user can track the location and activities of the target.

In a second example of operation, a UAV may be on a general reconnaissance mission. The UAV may be launched from another aerial vehicle (such as a plane or drone) and the UAV may be programmed to perform according to a predetermined flight plan. The remote control station may be mounted within or integrated into the other aerial vehicle, and there might not be a human user present.

Accordingly, the UAV may fly according to the flight plan, streaming live video of its surroundings to the remote control station. The remote control station, or the other aerial vehicle, may have the capability to perform image recognition on the live video stream in order to detect obstacles and objects. For instance, if the remote control station detects a previously unknown obstacle, it may transmit command and control information to the UAV so that the UAV may avoid the obstacle. Similarly, if the remote control station detects an object of interest, it may transmit command and control information to the UAV so that the UAV zooms its camera in to take more detailed still or moving pictures of the object.

In either of these exemplary embodiments, or in other embodiments, the UAV may adapt the codec bit-rate of the encoded stream of video frames to the maximum bit-rate of the wireless air interface. For instance, when the wireless air interface has sufficient capacity to support communication between a UAV and a remote control station, this communication may proceed satisfactorily. However, communication networks in general, and wireless networks in particular, are subject to impairments that can lead to packet corruption and packet loss. For instance, a wireless signal can suffer from various types of attenuation, reflections, and/or interference. These impairments can be created by various means, and from physical, magnetic, electronic, or other types of sources.

Impairments may be measured in numerous ways, including but not limited to a bit error rate (BER), and a packet error rate (PER). The BER of a communication may be the ratio of the number of bits erroneously received to the total number of bits received. Similarly, the PER of a communication may be the ratio of the number of packets erroneously received to the total number of packets received. For bi-directional wireless air interfaces, such as the wireless air interface discussed herein, each direction may exhibit a different BER and/or PER.

The transmitter of a packet may not always be aware of whether the packet was impaired or arrives successfully. Thus, it can be advantageous for the intended receiver of a packet to either transmit an acknowledgment to the transmitter if the packet was successfully received, or transmit a negative acknowledgement to the transmitter if the packet arrived impaired or did not arrive within a reasonable time frame. These acknowledgments and negative acknowledgments provide feedback to the transmitter from which the transmitter may be able to estimate a BER or a PER for the wireless air interface. Furthermore, the receiver may measure the BER, PER, or some other wireless air interface quality metric, and from time to time transmit an indication or representation of these measurements to the transmitter. From the indication or representation, the transmitter may also be able to estimate a BER or a PER for the wireless air interface.

The estimated BER or PER of a wireless air interface may be used to further estimate a maximum bit rate of the wireless air interface. Generally speaking, as the BER and/or PER of a wireless air interface grows, the bit rate of that wireless air interface decreases. Thus, for example, a wireless air interface with a BER of 1/100 is likely to have a higher maximum bit rate than a wireless air interface with a BER of 1/1000 or 1/10000. Therefore, upon determining that the BER and/or PER of a wireless air interface has increased, a UAV or a remote control station may further determine that the maximum bit rate of the wireless air interface has decreased. Conversely, upon determining that the BER and/or PER of a wireless air interface has decreased, a UAV or a remote control station may further determine that the maximum bit rate of the wireless air interface has increased.

It is usually advantageous for a UAV to transmit video to a remote control station using the highest bit-rate codec that the wireless air interface between them can support. But, since wireless air interface conditions may fluctuate over time, the UAV and the remote control station may adapt to these changing wireless air interface conditions by switching to a lower or higher bit rate codec while engaged in an ongoing video session. Such an adaptation may occur multiple times during a UAV's mission.

As an example, suppose that a UAV has determined that the wireless air interface between it and a remote control station can support a maximum bit-rate of 1000 kilobits per second. The UAV may configure its codec to encode a video stream from its camera at 768 kilobits per second. Doing so leaves additional capacity on the wireless air interface for transmission of command and control information and additional information.

However, if the UAV determines that the maximum capacity of the wireless air interface has dropped to 500 kilobits per second, the UAV may configure its codec to encode a video stream from its camera at 384 kilobits per second. The UAV may continue to increase or decrease the video stream's bitrate as the characteristics of the wireless air interface change further.

Some reasons for the maximum capacity of the wireless air interface changing include, but are not limited to (i) a change in distance between the UAV and the remote control station, (ii) a physical barrier coming in between the UAV and the remote control station, and (iii) the UAV handing off from one remote control station to another.

Regardless of cause, from time to time, the maximum bit-rate of the wireless air interface may be reduced to very low level, for example just a few kilobits per second. The wireless air interface may be used for transmission of the aforementioned video, as well as command and control information, and potentially additional information as well. In such a very low bit-rate situation, the wireless air interface may have insufficient capacity to support all of this information, even if the video stream from to the UAV to the remote control station is reduced to a low bit-rate.

Accordingly, the UAV and/or the remote control station may prioritize certain types or classes of information that they transmit on the wireless air interface over other types or classes of information that they transmit on the wireless air interface. Preferably, the UAV and remote control station prioritize transmissions associated with command and control information and at least some video information over transmissions associated with additional information. To do so, the UAV and the remote control station may transmit information in IP packets on the wireless air interface, and may accordingly use IP differentiated services to prioritize some packets over other packets.

An exemplary differentiated services standard is defined by IETF RFC 2474 and is incorporated by reference in its entirety herein. IP differentiated services may be used such that each IP packet transmitted over the wireless air interface includes a differentiated services code point (DSCP) marking appearing its header. The DSCP marking preferably contains a value designating a desired treatment of the packet. A DSCP marking may consist of one or more bits in a pattern that can be interpreted to specify a forwarding preference and/or a drop preference. For instance, assuming for the moment that the DSCP consists of six bits, the pattern 001010 may indicate the highest level of forwarding preference (potentially resulting in less packet loss for packets containing that pattern), while the pattern 000000 may indicate a best effort service (potentially resulting in more packet loss for packets containing that pattern).

Accordingly, when the UAV or remote control station generates an IP packet to transmit on the wireless air interface, the UAV or remote control station may examine the packet's DSCP, and apply an appropriate forwarding policy to the packet. For example, the UAV or remote control station may implement different egress queues for each DSCP marking value. Thus, the UAV or remote control station may place packets with a DSCP marking of 001010 in a high priority queue, and place packets with a DSCP marking of 000000 in a low priority queue. Then, the UAV or remote control station may forward packets in higher priority queues before serving packets in lower priority queues. Thus, packets with a DSCP marking indicative of a higher forwarding preference are more likely than packets with a DSCP marking of a lower forwarding preference to be successful transmitted over the wireless air interface when the wireless air interface has a low maximum bit-rate.

However, types of packet prioritization other than IP differentiated services may be used as well. Furthermore, the exact implementation of packet prioritization may be different than the multiple queue approach discussed above.

In any case, the UAV and the remote control station may use such a packet prioritization scheme to assign high priorities to important information that they transmit, such as command and control information and video information. Under such an arrangement, command and control information and video information is more likely to be successfully received than the additional information.

Packet prioritization may be also used to further differentiate between more important and less important video frames within an encoded stream of video frames. Modem video encoding techniques such as MPEG-4 may use differential encoding to reduce the network capacity requirements of video transmissions. According to these techniques, each video frame in a video stream may be either a fully-encoded standalone frame (an I-frame), or a frame that is differentially encoded based on a nearby I-frame (e.g., a P-frame or B-frame). Each sequence of an I-frame followed or preceded by a series of P-frames and B-frames may be called a Group of Pictures (GOP). Differentially encoded frames, such as P-frames, may require less capacity than I-frames because differentially encoded frames take advantage of temporal redundancy that is inherent in video to encode the difference between the current frame and the previous or subsequent frame.

Thus, an example sequence of video frames may include an I-frame followed by two P-frames. The I-frame encodes a full frame of video. However, the first P-frame after the I-frame preferably encodes the difference from the video frame represented the by I-frame to the video frame represented by the first P-frame. Similarly, the second P-frame preferably encodes the difference from the video frame represented by the first P-frame to the video frame represented by the second P-frame. In this way, the wireless air interface capacity requirements for transmission of the encoded stream of video frames is reduced, because P-frames are expected to require less capacity than I-frames.

However, to decode a given P-frame, first the most recent I-frame must be decoded and then all subsequent frames up to and including the given P-frame must be decoded. Thus, it desirable for I-frames to be given priority over differentially-encoded frames, such as P-frames, when transmitting an encoded stream of video frames. I-frames are standalone frames and do not require the reception of other frames in order to be rendered on an output unit. Additionally, if the output unit associated with the recipient of the video stream cannot properly render a P-frame, the output unit may be able to freeze the video at the most recently-played I-frame or P-frame in a GOP until a new I-frame or P-frame is properly received.

Accordingly, the UAV may assign a higher priority to packets containing information from I-frames, and the UAV may assign a lower priority to packets containing information from differentially encoded frames.

Thus, there are at least three ways that the UAV and the remote control station can adapt to fluctuating capacity on a wireless air interface: (1) the UAV may reduce or increase the bit-rate of the video stream by changing its codec parameters, (2) the UAV and the remote control station may apply packet prioritization to command and control information and video information, so that packets containing these types of information are more likely to be successfully transmitted than packets containing additional information, and (3) the UAV may apply additional packet prioritization between packets containing information from full video frames and packets containing information from differentially-encoded video frames.

The reduction of video stream bit-rate may be applied after the UAV determines that the maximum bit-rate of the wireless air interface between the UAV and the remote control station has decreased. Similarly, the UAV may increase the video stream bit-rate if after the UAV determines that the maximum bit-rate of the wireless air interface between the UAV and the remote control station has increased. The packet prioritization schemes may be in trigged when the UAV and/or the remote control station determines that the maximum bit-rate of the wireless air interface has decreased, or these packet prioritization schemes may be in place continuously.

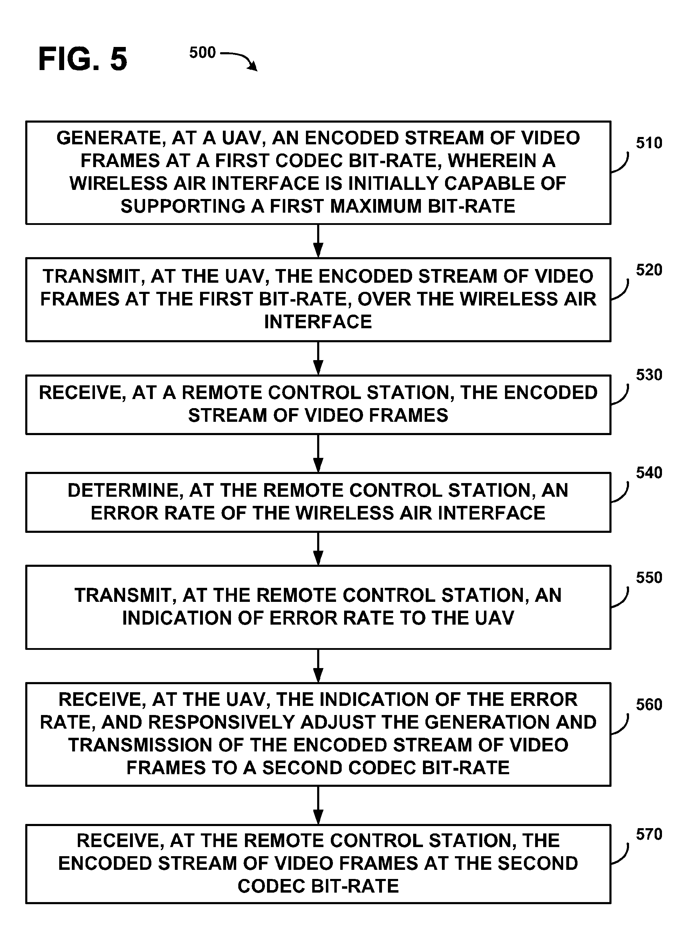

Figure 5 is an exemplary flow chart depicting method 500, which is in accordance with various embodiments presented herein. Method 500 provides a means with which a UAV can communicate with a remote control station on a wireless air interface that is initially capable of supporting a first maximum bit-rate. At step 510, the UAV generates an encoded stream of video frames at a first codec bit-rate, according to a first codec configuration. Preferably, the first codec bit-rate is less than the first maximum bit-rate.

At step 520, the UAV transmits the encoded stream of video frames at the first bit-rate over the wireless air interface. At step 530, the remote control station receives the encoded stream of video frames from the wireless air interface. The remote control station may decode and display these video frames to, for example, a human user. At step 540, the remote control station determines an error rate of the wireless air interface. This error rate may be a BER, a PER, or some other form of error rate. At step 550, the remote control station transmits an indication of this error rate to the UAV.

At step 560, the UAV receives the indication of the error rate, and responsively adjusts the generation of the encoded stream of video frames to a second codec bit-rate. The error rate preferably is indicative of the capacity of the wireless air interface changing to being capable of supporting a second maximum bit-rate. Accordingly, the second codec bit-rate may be less than the second maximum bit-rate. However second maximum bit-rate may be either less than or greater than the first maximum bit-rate. Alternatively, the UAV may perform this adjustment based on triggers or input other than the reception of the indication of the error rate from the remote control station. For example, the UAV may determine, on its own, that the wireless air interface has changed to support the second maximum bit-rate.

Preferably, the UAV generates the encoded stream of video frames at the second bit-rate by adjusting the first codec configuration. This may be accomplished by changing at least one of a frame rate, a frame size, a resolution, and a color depth, thereby establishing a second codec configuration. At step 570, the remote control station may receive the encoded stream of video frames at the second codec bit-rate.

Throughout method 500, the UAV and the remote control station may use packet prioritization schemes. For instance, the UAV and the remote control station may exchange additional information, and the UAV and the remote control station may prioritize command and control information over transmission of the additional information. Alternatively or additionally, the encoded stream of video frames may be comprised of full frames and differentially-encoded frames, and the UAV may prioritize the transmission of the full frames over the transmission of the differentially-encoded frames.

Method 500 is exemplary in nature, and alternative and/or additional embodiments may also be within the scope of the invention. For instance, method 500 may contain more or fewer steps, and these steps may take place in a different order than illustrated in method 500. Furthermore, method 500 may include additional methods, processes, or functions described elsewhere in this specification or the accompanying drawings.

## Claims

1. A system on an unmanned aerial vehicle (UAV), for facilitating communication, over a wireless air interface, between the UAV and a remote control station, wherein the wireless air interface is capable of supporting a first maximum bit-rate, the system comprising:
an avionics unit for controlling a flight path of the UAV;
a camera unit, for generating a stream of video frames, wherein each video frame of the stream is a picture taken by the camera unit as the UAV proceeds according to the flight path;
a codec unit, coupled to the camera unit, for encoding the stream of video frames according one or more codec parameters, thereby generating an encoded stream of video frames at a first codec bit-rate, wherein the first codec bit-rate is less than the first maximum bit-rate;
a transceiver unit, coupled to the avionics unit and the codec unit, for communicating with the remote control station over the wireless air interface, wherein the transceiver unit exchanges command and control information with the remote control station, wherein the transceiver unit transmits the encoded stream of video frames from the codec unit to the remote control station, and wherein the command and control information influences the operation of the avionics unit; and
a processing unit, coupled to the avionics unit, the codec unit and the transceiver unit, for (i) determining that the wireless air interface has changed to support a second maximum bit-rate, and responsive to the determination, instructing the codec to change the codec parameters such that the codec generates the encoded stream of video frames at a second codec bit-rate, wherein the second codec bit-rate is less than the second maximum bit-rate, and (ii) granting a first priority to the command and control information and granting a second priority to at least some frames of the encoded stream of video frames, wherein the first priority is higher than the second priority, thereby prioritizing the command and control information transmitted by the UAV over the at least some frames of the encoded stream of video frames transmitted by the UAV.

2. The system of claim 1, wherein the encoded stream of video frames is comprised of full frames and differentially-encoded frames, and wherein the processing unit grants the full frames of the encoded stream of video frames the first priority, thereby prioritizing the full frames of the encoded stream of video frames over the differentially-encoded frames of the encoded stream of video frames.

3. The system of claim 1, wherein the processing unit is configured to determine that the wireless air interface has changed to support a third maximum bit-rate, and responsive to the determination, instructs the codec to change the codec parameters such that the codec generates the encoded stream of video frames at a third codec bit-rate, wherein the third codec bit-rate is less than the third maximum bit-rate.

4. The system of claim 1, wherein changing the codec parameters comprises changing at least one of a frame rate, a frame size, a resolution, and a color depth.

5. The system of claim 1, wherein the processing unit determining that the wireless air interface has changed comprises the processing unit receiving an indication from the remote control station that the wireless air interface has changed.

6. The system of claim 1, wherein the transceiver unit is also for exchanging additional information between the UAV and the remote control system, and wherein the processing unit is for granting the second priority to the additional information, thereby prioritizing the command and control information transmitted by the UAV over the additional information transmitted by the UAV.

7. A remote control system for communication with an unmanned aerial vehicle (UAV), wherein the communication uses a wireless air interface between the remote control station and the UAV, wherein the wireless air interface is capable of supporting a first maximum bit-rate, the system comprising:
an input unit, for generating command and control information;
a transceiver unit, for communicating with the UAV over the wireless air interface, wherein the transceiver unit (i) transmits, to the UAV, the command and control information generated by the input unit, (ii) receives, from the UAV, an encoded stream of video frames, and (iii) exchanges additional information with the UAV;
a codec unit, coupled to the transceiver unit, for decoding the encoded stream of video frames, thereby generating a decoded stream of video frames; and
a processing unit, coupled to the input unit, the codec unit and the transceiver unit, for (i) determining that the wireless air interface has changed to support a second maximum bit-rate, and responsive to the determination, transmitting an indication of the change to the UAV, and (ii) granting a first priority to command and control information and granting a second priority to at least some of the additional information, wherein the first priority is higher than the second priority, thereby prioritizing the command and control information transmitted by the remote control station over the at least some of the additional information transmitted by the remote control station.

8. The system of claim 7, wherein determining that the wireless air interface has changed to support a second maximum bit-rate comprises the processing unit measuring error rates on the wireless air interface and the processing unit determining that the error rates have varied by more than a pre-determined threshold amount.

9. A system comprising:
an unmanned aerial vehicle (UAV), for transmitting an encoded stream of video frames at a first codec bit-rate over a wireless air interface, wherein the wireless air interface is capable of supporting a first maximum bit-rate;
a remote control station, for exchanging command and control information with the UAV, and for (i) receiving the encoded stream of video frames at the first codec bit-rate over the wireless air interface, (ii) determining an error rate of the wireless air interface, (iii) responsive to determining the error rate, transmitting an indication of the error rate to the UAV, and (iv) after transmitting the indication, receiving the encoded stream of video frames at a second codec bit-rate over the wireless air interface, wherein the remote control station and the UAV prioritize transmission of the command and control information over transmission of at least some of the encoded stream of video frames.

10. The system of claim 9, wherein the UAV generates the encoded stream of video frames using a first codec configuration and at the first codec bit-rate, and wherein the UAV (i) receives the indication of the error rate from the remote control station, (ii) adjusts the codec configuration by changing at least one of a frame rate, a frame size, a resolution, and a color depth, thereby establishing a second codec configuration, and (iii) transmits, to the remote control station, the encoded stream of video frames according to the second codec configuration and at the second codec bit-rate.
